# EUROPÄISCHE PATENTSCHRIFT

(11) **EP 2 397 716 B1**
(45) Veröffentlichungstag und Bekanntmachung des Hinweises auf die Patenterteilung: **21.08.2013**
(21) Anmeldenummer: 11170118.1
(22) Anmeldetag: 16.06.2011
(51) Int. Cl.: F16D 3/68

(54) **Elastische kupplung**
Elastic coupling
Accouplement élastique

(30) Priorität: 21.06.2010 AT 10242010
(43) Veröffentlichungstag der Anmeldung: 21.12.2011
(73) Patentinhaber: Tectos GmbH, 8010 Graz (AT)
(72) Erfinder: Höfler, Dieter, 8010 GRAZ (AT)
(74) Vertreter: Babeluk, Michael

(56) Entgegenhaltungen:
- DE-A1- 1 956 089
- DE-A1-102008 013 531
- GB-A- 183 014
- LU-A1- 65 497
- US-A- 2 943 464
- US-A- 5 720 638

## Beschreibung

Die Erfindung betrifft eine elastische Kupplung zur Drehverbindung von Komponenten in einem Antriebsstrang, mit zumindest einer Klaueneinheit mit einem ersten und einem von diesem axial beabstandeten zweiten Klauenring, wobei jeder der Klauenringe an einer dem anderen Klauenring zugewandten inneren Stirnfläche eine Mehrzahl von in axialer Richtung vorstehenden Klauen und zwischen den Klauen ausgebildete Freiräume aufweist, wobei die Klauen jedes Klauenringes in die Freiräume des benachbarten Klauenringes eingreifen, und wobei zwischen den Klauen von ineinander greifenden Klauenringen Elastomerelemente angeordnet sind, wobei die Freiräume zumindest eines Klauenringes, vorzugsweise des zweiten Klauenringes, durch Taschen gebildet sind, und die Taschen jeweils durch die Flanken von benachbarten Klauen, der inneren Stirnfläche des Klauenringes und einem sich zwischen den benachbarten Klauen erstreckenden zylindrischen Mantelsegment aufgespannt sind, dessen Radius dem kleinsten Abstand der Klauen von der Drehachse entspricht.

Elastische Kupplungen mit Klauenringen und zwischen den Klauenringen angeordneten Elastomerelementen sind aus den Veröffentlichungen DE 22 115 12 A1, US 3,884,049 A, FR 2 327 442 A, DE 152 53 81 B1, US 3,485,062 A DE 1 625 801 A, DE 24 04 714 A1, DE 26 18 340 A1, FR 2 246 175 A5, FR 2 248 740 A5, FR 1 388 960 A und US 4,627,885 A bekannt.

Ein Kupplungselement mit zwei in Serie hintereinander angeordneten Elastomerelementen mit jeweils einem ersten und einem zweiten Klauenring wird in der US 5,928,083 A geoffenbart. Zwischen den Klauen der Klauenringe sind Freiräume ausgebildet, welche mit Elastomerelementen gefüllt sind.

Spielfreie elastische Kupplungen sind weiters aus den Druckschriften US 2,659,219 A, US 2,343,839 A, GB 4 459 909 A und US 2,025,825 A bekannt.

Eine weitere elastische Kupplung ist aus der DE 24 21 663 A1 bekannt, wobei die Kupplung eine Klaueneinheit mit einem ersten und einem zweiten Klauenring aufweist, welche voneinander axial beabstandet sind. Jeder Klauenring weist eine Mehrzahl von vorstehenden Klauen auf, zwischen welchen durch Taschen gebildete Freiräume ausgebildet sind, wobei die Klauen jedes Klauenringes in die Freiräume des benachbarten Klauenringes eingreifen und zwischen den Klauen von ineinander greifenden Klauenringen Elastomerelemente angeordnet sind.

Die US 2007/0021249 A1 beschreibt einen Dämpfungsmechanismus für ein Zahnrad eines Geländefahrzeuges, wobei das Zahnrad auf einer Seite fest mit dem Zahnrad verbundene Vorsprünge aufweist, welche in Vertiefungen eines elastischen Körpers eingreifen, der mit einer festen Aufnahme verbunden ist.

DE 1 956 089 zeigt eine Kupplung, die zumindest zwei seriell hintereinandergeschaltete Klaueneinheiten aufweist, wobei jede Klaueneinheit einen ersten und einen zweiten Klauenring aufweist, dass zumindest ein Klauenring, vorzugsweise der erste Klauenring der ersten Klaueneinheit, eine in axialer Richtung von der inneren Stirnfläche vorstehende Lagerhülse aufweist, wobei am Umfang der Lagerhülse zumindest ein anderer Klauenring, vorzugsweise der zweite Klauenring der ersten Klaueneinheit, vorzugsweise über Wälzlager, drehbar gelagert ist.
Bekannte elastische Kupplungen haben den Nachteil, dass es bei Überlast leicht zu einer Zerstörung der Elastomerringe kommen kann. Der Austausch der Elastomerringe erfordert in den meisten Fällen den Ausbau der Welle und ist somit relativ aufwändig.
Aufgabe der Erfindung ist es, diese Nachteile zu vermeiden und eine Kupplung zu schaffen, welche unempfindlich gegen Überlast ist und welche eine einfache Wartung ermöglicht.
Erfindungsgemäß wird dies dadurch erreicht, dass der erste und/oder zweite Klauenring der zweiten Klaueneinheit, vorzugsweise über Wälzlager, am Umfang der Lagerhülse drehbar gelagert ist.

>

>

Durch die Lagerung der Klauenringe über Lager, insbesondere Wälzlager, werden die zwischen den Klauen sich befindenden Elastomerelemente nur auf Druck belastet und somit geschont. Scherbeanspruchungen zwischen den Klauenringen werden vermieden. Durch die definierte axiale Führung können Fehlstellungen der Klauenringe zuverlässig ausgeschlossen werden.

Die Klaueneinheit kann dabei in einer Außenhülse angeordnet sind, welche fest mit einem der Klauenringe verbunden ist.

Im momentenfreien Zustand kann zwischen jedem Elastomerelement und den angrenzenden Flächen, vorzugsweise der Taschen, zumindest ein erster Verdrängungsraum ausgebildet sein. Wird die Kupplung mit Drehmoment beaufschlagt, so wird das Elastomerelement in den Verdrängungsraum verdrängt, bis dieser gefüllt ist. Auf Grund der Inkompressibilität des Elastomerelementes geht die Kupplung dadurch auf Anschlag.

Besonders vorteilhaft ist es, wenn die vorzugsweise durch einen Elastomerring gebildeten Elastomerelemente in radialer Richtung zumindest teilweise von der Außenhülse beabstandet sind, wobei zwischen den Elastomerelementen und der Außenhülse ein definierter zweiter Verdrängungsraum für die Elastomerelemente gebildet ist.

Zumindest ein Elastomerelement kann eine radiale Erhebung in Richtung der Außenhülse aufweisen, wobei vorzugsweise die Erhebung die Innenseite der Außenhülle kontaktiert. Im zusammengebauten Zustand werden die Elastomerelemente bereits gequetscht, wobei die Erhebungen an der Innenseite der Außenhülle streifen. Wird nun im Betrieb Last aufgebracht, so drücken die Elastomerelemente zusätzlich gegen die Außenhülse und es kommt zu höheren Reibkräften, die eine Erhöhung der Dämpfung verursachen.

Die Klaueneinheiten können unterschiedliche Durchmesser und/oder unterschiedliche Materialien für die Elastomerelemente aufweisen. Dadurch können unterschiedliche Steifigkeiten und stufenartige Steifigkeitscharakteristiken erreicht werden.

Um Teile und Bauraum einzusparen, können zumindest die benachbarten inneren Klauenringe von zwei hintereinandergeschalteten Klaueneinheiten einstückig ausgebildet sind.

Zumindest ein Klauenring zumindest einer Klaueneinheit kann eine Flanschfläche zum Anschluss einer Komponenten des Antriebsstranges aufweisen.

Die elastische Kupplung ermöglicht bei einer exakten axialen Führung der mindestens zwei Klauenringe einen genau definierten Steifigkeitsverlauf. Bei einer vollkommenen Füllung der Verdrängungsräume durch die Elastomerelemente geht die Steifigkeit gegen unendlich, ohne die Elastomerelemente dabei zu schädigen.

Durch die Konstruktion der Kupplung ist ein Wechsel der Elastomerelemente ohne den Ausbau der Kupplung möglich.

Eine Einstellung des Steifigkeitsverlaufes kann realisiert werden, wenn unterschiedliche Härten für die Elastomerringe verwendet werden.

In Weiterführung der Erfindung kann weiters vorgesehen sein, dass am ersten äußeren Klauenring oder an der Außenhülse ein erster Inkrementkranz fest angeordnet ist, wobei vorzugsweise der zweite äußere Klauenring fest mit einem zweiten Inkrementkranz verbunden ist.

Die Inkrementkränze ermöglichen es, die elastische Kupplung mit Drehzahlmesseinrichtung auszustatten, um die Drehzahl sowie die Relativdrehzahl in der Kupplung zu messen. Dadurch ist es möglich, die Drehmomente sowie die Verlustleistungen im Elastomer zu bestimmen und eine Systemüberwachung einzusetzen.

Die Elastomerringe können durch Bänder gebildet sein und können somit durch die Demontage lediglich der Außenhülse gewechselt werden.

Die Konstruktion ermöglicht die Übertragung hoher Drehmomenten bei kleinem Bauraum. Durch die klauenförmige Gestaltung der Kupplung der daraus resultierenden Druckbelastung der Elastomerelemente sind sehr hohe Wechsellasten möglich. Die Reibung zwischen der Außenhülse und den Elastomerelementen führt zu hohen Dämpfungen. Durch die Drehzahlmessung kann zusätzlich die Verlustleistung gemessen werden.

Die Erfindung wird im Folgenden anhand der Figuren näher erläutert. Es zeigen:

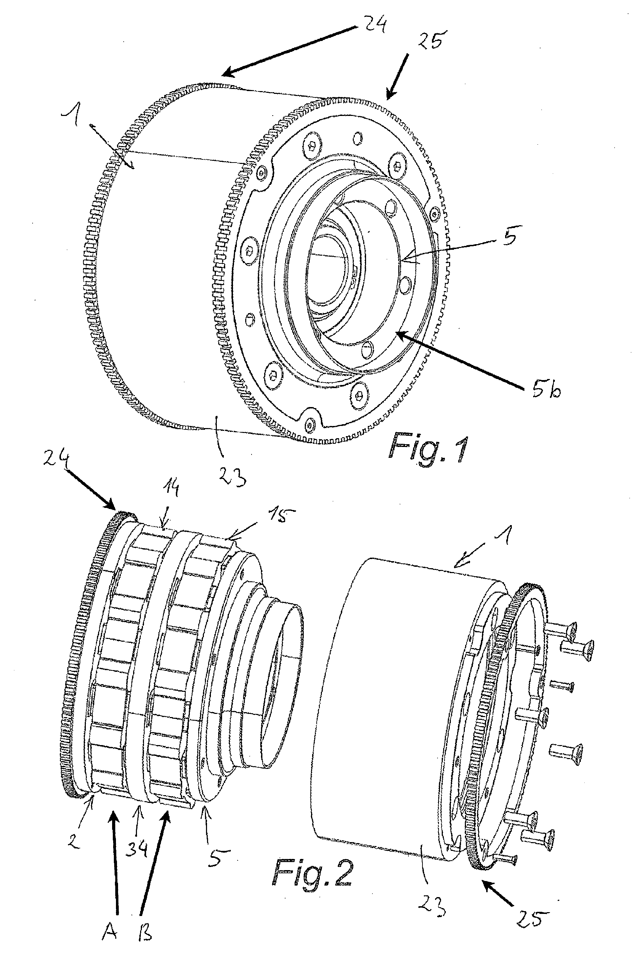

- Fig. 1: eine erfindungsgemäße elastische Kupplung in einer Schrägansicht;
- Fig. 2: die elastische Kupplung in einer Explosionsdarstellung mit montierten Elastomerelementen;
- Fig. 3: die elastische Kupplung in einer Explosionsdarstellung mit demontierten Elastomerelementen;
- Fig. 4: die elastische Kupplung in einer weiteren Explosionsdarstellung;
- Fig. 5: die elastische Kupplung in einer stirnseitigen Ansicht;
- Fig. 6: die elastische Kupplung in einem Schnitt gemäß der Linie VI-VI in Fig. 5;
- Fig. 7: die elastische Kupplung in einem Schnitt gemäß der Linie VII-VII in Fig. 5;
- Fig. 8: einen Klaueneinheit in einem Schnitt ohne Elastomerelementen;
- Fig. 9: diesen Klauenring mit Elastomerelementen im momentenfreien Zustand; und
- Fig. 10: diesen Klauenring bei Volllast.

Die in den Figuren dargestellte elastische Kupplung 1 weist zwei in Serie geschaltete Klaueneinheiten A und B auf, wobei die erste Klaueneinheit A einen ersten Klauenring 2 und eine zweite Klaueneinheit 3 beinhaltet. Die zweite Klaueneinheit B weist ebenfalls einen ersten und einen zweiten Klauenring 4, 5 auf.

Dabei sind die inneren Klauenringe, also der zweite Klauenring 3 der ersten Klaueneinheit A und der erste 4 Klauenring der zweiten Klaueneinheit B einstückig als Doppelklauenring 34 ausgebildet.

Die äußeren Klauenringe, also der erste Klauenring 2 der ersten Klaueneinheit A und der zweite Klauenring 5 der zweiten Klaueneinheit B weisen Flanschflächen 2b, 5b zum Anschluss an weitere Komponenten des Antriebsstranges auf. An den einander zugewandten Stirnfläche 2a, 3a sowie 4a, 5a weisen die Klauenringe 2, 3, 4, 5 eine Anzahl an von den Stirnflächen 2a, 3a, 4a, 5a vorspringenden balligen Klauen 6, 7, 8, 9 auf, wobei zwischen den Klauen 6, 7, 8, 9 Freiräume 10, 11, 12, 13 ausgebildet sind. In die Freiräume 10, 11, 12, 13 greifen jeweils die Klauen 6, 7, 8, 9 des benachbarten Klauenringes 2, 3, 4, 5 ein. Die durch die Abstände der Klauen 6, 7, 8, 9 definierten Freiräume 10, 11, 12, 13 sind wesentlich größer bemessen, als die Breite b der Klauen 6, 7, 8, 9.

In die Freiräume 10, 11, 12, 13 sind jeweils zwischen zwei Klauen 6, 8; 7, 9 keilförmige Elastomerelemente 14a, 15a eingepresst, wobei die Elastomerelemente 14a, 15a über den Umfang verbunden und als Elastomerringe 14, 15 ausgebildet sind. Die Elastomerringe 14, 15 sind jeweils Teil der Klaueneinheiten A und B.

Die Freiräume 11, 13 der zweiten Klauenringe 3, 5 sind durch Taschen 11a, 13a gebildet sind. Die Taschen 11a, 13a werden durch die Flanken 7a, 7b bzw. 9a, 9b von benachbarten Klauen 7 bzw. 9, der inneren Stirnfläche 3a bzw. 5a des jeweiligen zweiten Klauenringes 3, 5 und einem sich zwischen den benachbarten Klauen 7, 9 erstreckenden zylindrischen Mantelsegment 3c bzw. 5c aufgespannt, dessen Radius r dem kleinsten Abstand der Klauen 7, 9 von der Drehachse 1a entspricht, wobei im momentenfreien Zustand zwischen jedem Elastomerelement 14a, 14b und den Taschen 11a, 13a erste Verdrängungsräume 26 ausgebildet sind.

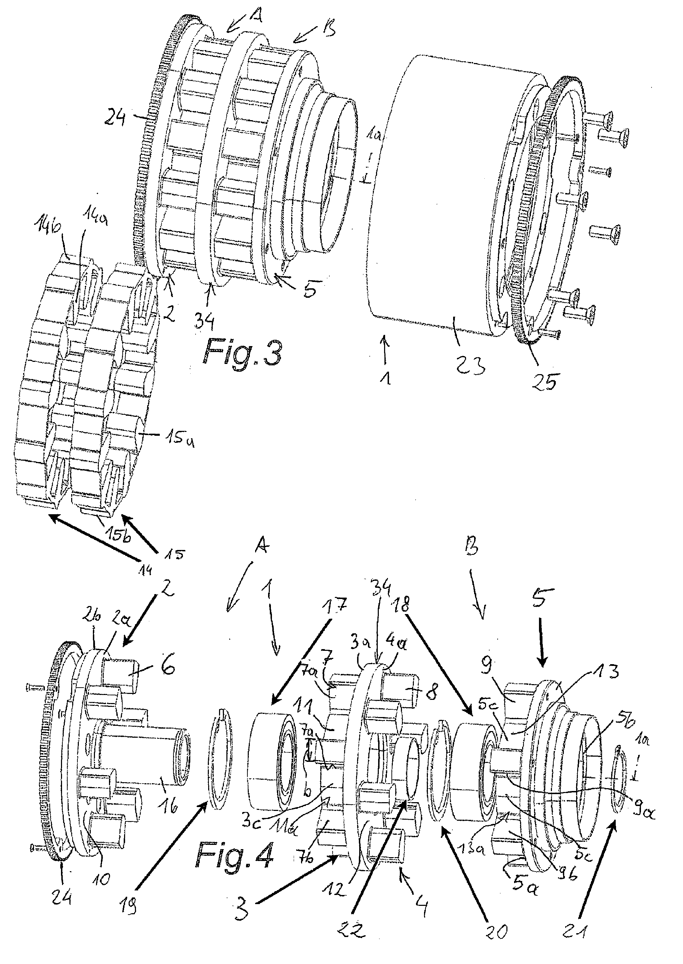

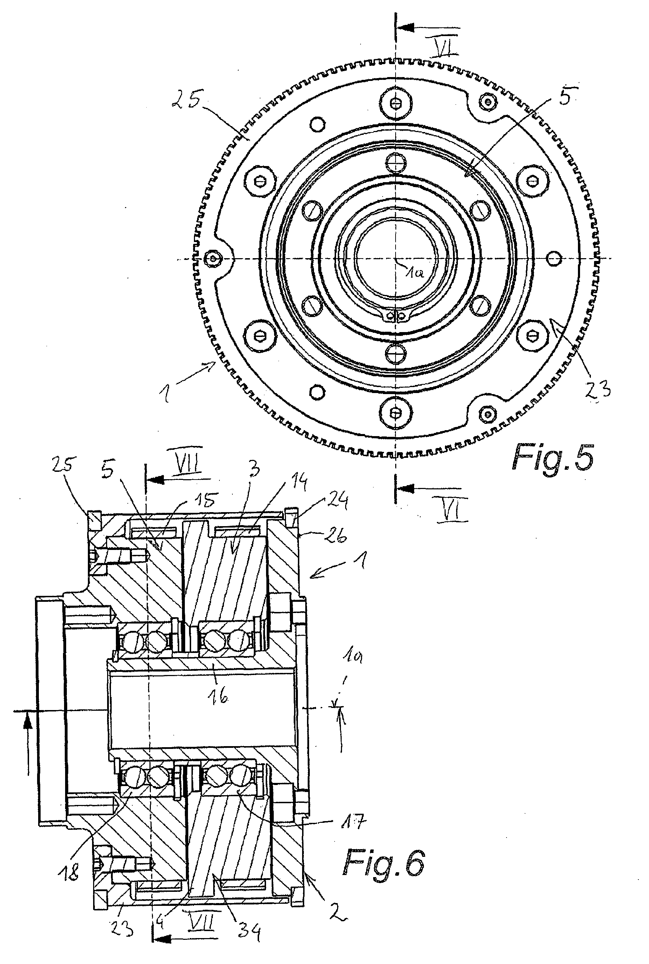

Der erste Klauenring 2 der ersten Klaueneinheit A weist eine von der Stirnseite 2a axial vorstehende Lagerhülse 16 auf, auf welcher der Doppelklauenring 34 mit dem Klauenringen 3 und 4 zweite äußere Klauenring 3, sowie der zweite Klauenring 5 der zweiten Klaueneinheit B über Wälzlager 17, 18 gelagert ist, wie aus den Fig. 4 und 6 deutlich hervorgeht. Mit Bezugszeichen 19, 20 und 21 sind Sicherungsringe und mit 22 ein Distanzring bezeichnet. Durch den Distanzring 22 wird der Abstand zwischen dem Wälzlager 18 des ersten Klauenringes 4 und dem zweiten Klauenring 5 der zweiten Klaueneinheit B definiert. Die Klaueneinheiten A, B sind von einer Außenhülse 23 umgeben, welche mit dem zweiten äußeren Klauenring 5 der zweiten Klaueneinheit B fest verbunden ist. Zwischen den Elastomerringen 14, 15 und der Außenhülse 23 sind zweite Verdrängungsräume 27 ausgebildet.

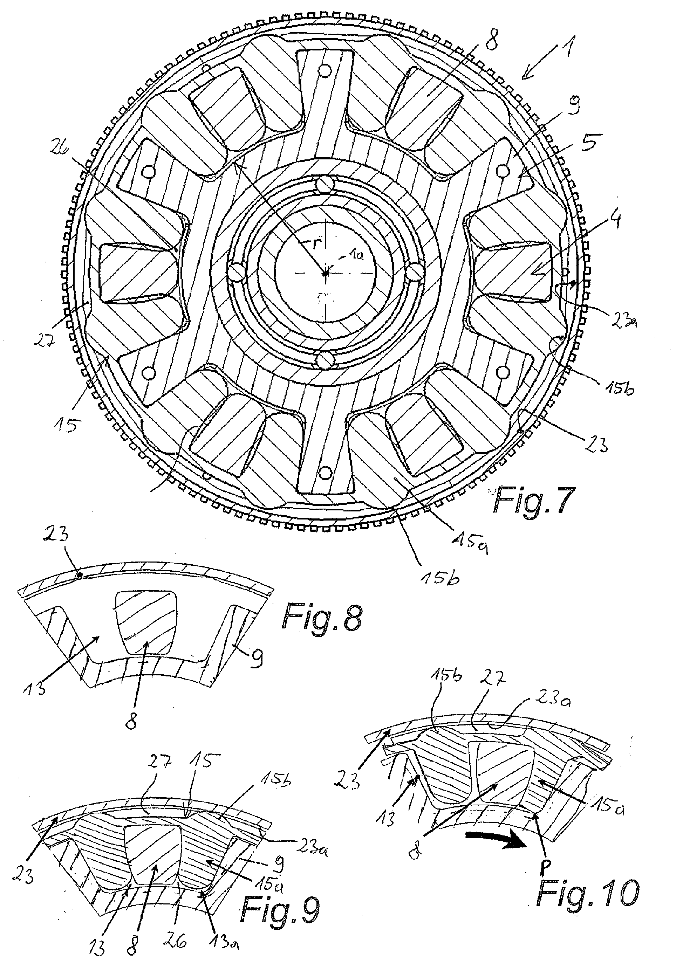

Wie aus der Fig. 3 ersichtlich ist, sind an der radial äußeren Seite der Elastomerelemente 14a, 15a Erhebungen 14b, 15b vorgesehen. Die Gestaltung der Klauen 6, 7, 8, 9 und der Elastomerelemente 14a, 15a ist so bemessen, dass beim Einbau die Elastomerelemente 14a, 15a vorgespannt werden. Die Elastomerelemente 14a, 15a sind dabei mit Übermaß, also etwas größer als die entsprechenden Freiräume 10, 11, 12, 13 ausgeführt, wie aus Fig. 7 ersichtlich ist. Im zusammengebauten Zustand werden somit die Elastomerelemente 14a, 15a bereits gequetscht, wobei die Erhebungen 14b, 15b an der Innenseite 23a der Außenhülse 23 streifen. Bei Lastaufbringung werden die Elastomerelemente 14a, 15a zusätzlich gegen die Außenhülse 23 gedrückt, wodurch die Reibkräfte zunehmen, was wiederum eine Erhöhung der Dämpfung bewirkt. Dies verhindert ein Verdrehen der Elastomerringe 14, 15 relativ zur Außenhülse 23.

Durch die Wälzlager 17, 18 des zweiten äußeren Klauenringes 3 und des inneren Klauenringes 4 werden die zwischen den Klauen 6, 7, 8, 9 befindlichen Elastomerelemente 14a, 15a nur auf Druck belastet.

Durch die keilförmige Geometrie der Klauen 6, 7, 8, 9 entsteht durch die Freiräume 10, 11, 12, 13 zwischen den Klauen 6, 7, 8, 9 eine nahezu abgeschlossene Zelle. Diese wird bei Überlast fast vollständig mit dem Elastomermaterial der Elastomerelemente 14a, 15a gefüllt, wobei das Elastomermaterial in die ersten und zweiten Verdrängungsräume 26, 27 ausweicht, wie durch Pfeil P in Fig. 10 angedeutet ist. Die Kupplung 1 geht somit auf Block. Kommt es zu einem Versagen des Elastomermaterials, so kann durch den Aufbau der Kupplung 1 ein Ausfall vermieden und ein gezieltes Abschalten der Anlage eingeleitet werden. Durch Abschrauben der zylindrischen Außenhülse 23 kann der defekte Elastomerring 14, 15 demontiert und durch einen entsprechenden bandförmigen Elastomerring ersetzt werden.

Weiters ist mit dem ersten Klauenring der ersten Klaueneinheit A sowie mit der dem zweiten Klauenring 5 der zweiten Klaueneinheit B oder mit der Außenhülse 23 ein erster bzw. zweiter Inkrementkranz 24, 25 fest verbunden. Über die beiden Inkrementkränze 24, 25 kann eine induktive Drehzahlmessung erfolgen.

Durch die Ausrüstung der Kupplung 1 mit Inkrementkränzen 24, 25 ist es möglich, die Drehzahl sowie die Relativdrehzahl innerhalb der Kupplung 1 mittels einer Drehzahlmesseinrichtung zu erfassen. Dadurch können die Momente sowie die Verlustleistungen in den Elastomerringen 14, 15 bestimmt und eine Systemüberwachung durchgeführt werden.

Neben der einfachen Wartungs- und Reparaturmöglichkeit hat die beschriebene Kupplung 1 den Vorteil, dass hohe Drehmomente bei kleinem Bauraum übertragen werden können, wobei durch die Klauen 6, 7, 8, 9 und die Elastomerringe 14, 15 sehr hohe Wechsellasten möglich sind. Gleichzeitig führt die Reibung zwischen der zylindrischen Außenhülse 23 und den Elastomerringen 14, 15 zu hohen Dämpfungen.

## Patentansprüche

1. Elastische Kupplung (1) zur Drehverbindung von Komponenten in einem Antriebsstrang, mit zumindest einer Klaueneinheit (A; B) mit einem ersten und einem von diesem axial beabstandeten zweiten Klauenring (2, 3; 4, 5), wobei jeder der Klauenringe (2, 3; 4, 5) an einer dem anderen Klauenring (2, 3; 4, 5) zugewandten inneren Stirnfläche (2a, 3a; 4a, 5a) eine Mehrzahl von in axialer Richtung vorstehenden Klauen (6, 7; 8, 9) und zwischen den Klauen (6, 7; 8, 9) ausgebildete Freiräume (10, 11; 12, 13) aufweist, wobei die Klauen (6, 7; 8, 9) jedes Klauenringes (2, 3; 4, 5) in die Freiräume (10, 11; 12, 13) des benachbarten Klauenringes (2, 3; 4, 5) eingreifen, und wobei zwischen den Klauen (6, 7; 8, 9) von ineinander greifenden Klauenringen (2, 3; 4, 5) Elastomerelemente (14a, 15a) angeordnet sind, wobei die Freiräume (11, 13) zumindest eines Klauenringes (3, 5), vorzugsweise des zweiten Klauenringes (3; 5), durch Taschen (11a, 13a) gebildet sind, und die Taschen (11a, 13a) jeweils durch die Flanken (7a, 7b; 9a, 9b) von benachbarten Klauen (7; 9), der inneren Stirnfläche (3a; 5a) des Klauenringes (3; 5) und einem sich zwischen den benachbarten Klauen (7; 9) erstreckenden zylindrischen Mantelsegment (3c; 5c) aufgespannt sind, dessen Radius dem kleinsten Abstand der Klauen (7, 9) von der Drehachse (1a) entspricht, wobei
die Kupplung (1) zumindest zwei seriell hintereinandergeschaltete Klaueneinheiten (A, B) aufweist, wobei jede Klaueneinheit (A, B) einen ersten und einen zweiten Klauenring (2, 3; 4, 5) aufweist, dass zumindest ein Klauenring (2), vorzugsweise der erste Klauenring (2) der ersten Klaueneinheit (A), eine in axialer Richtung von der inneren Stirnfläche (2a) vorstehende Lagerhülse (16) aufweist, wobei am Umfang der Lagerhülse (16) zumindest ein anderer Klauenring (3, 4, 5), vorzugsweise der zweite Klauenring (3) der ersten Klaueneinheit (A), vorzugsweise über Wälzlager (17, 18), drehbar gelagert ist, **dadurch gekennzeichnet, dass** der erste und/oder zweite Klauenring (4, 5) der zweiten Klaueneinheit (B), vorzugsweise über Wälzlager (18), am Umfang der Lagerhülse (16) drehbar gelagert ist.

2. Kupplung (1) nach Anspruch 1, **dadurch gekennzeichnet, dass** die Klaueneinheit (A, B) in einer Außenhülse (23) angeordnet sind, welche fest mit einem der Klauenringe (2, 3; 4, 5) verbunden ist.

3. Kupplung (1) nach einem der Ansprüche 1 oder 2, **dadurch gekennzeichnet, dass** im momentenfreien Zustand zwischen jedem Elastomerelement (14a, 14b) und den angrenzenden Flächen, vorzugsweise der Taschen (11a, 13a), zumindest ein erster Verdrängungsraum (26) ausgebildet ist.

4. Kupplung (1) nach Anspruch 2 oder 3, **dadurch gekennzeichnet, dass** die vorzugsweise durch einen Elastomerring (14, 15) gebildeten Elastomerelemente (14a, 15a) in radialer Richtung zumindest teilweise von der Außenhülse (23) beabstandet sind, wobei zwischen den Elastomerelementen (14a, 15a) und der Außenhülse (23) ein zweiter Verdrängungsraum (27) für die Elastomerelemente (14a, 15a) gebildet ist.

5. Kupplung (1) nach einem der Ansprüche 2 bis 4, **dadurch gekennzeichnet, dass** zumindest ein Elastomerelement (14a, 15a) eine radiale Erhebung (14b, 15b) in Richtung der Außenhülse (23) aufweist, wobei vorzugsweise die Erhebung (14b, 15b) die Innenseite (23a) der Außenhülse (23) kontaktiert.

6. Kupplung (1) nach einem der Ansprüche 1 bis 5, **dadurch gekennzeichnet, dass** die aneinandergrenzenden inneren Klauenringe (3, 4) von hintereinandergeschalteten Klaueneinheiten (A, B) einstückig ausgebildet sind und einen Doppelklauenring (34) bilden.

7. Kupplung (1) nach einem der Ansprüche 1 bis 6, **dadurch gekennzeichnet, dass** zumindest ein Klauenring (2; 5) zumindest einer Klaueneinheit (A; B) eine Flanschfläche (2b; 5b) aufweist.

8. Kupplung (1) nach einem der Ansprüche 1 bis 7, **dadurch gekennzeichnet, dass** an zumindest einem äußeren Klauenring (2, 5) oder an der Außenhülse (23) ein Inkrementkranz (24, 25) drehfest angeordnet ist.

## Claims

1. An elastic coupling (1) for the rotational connection of components in a drive train, comprising at least one claw unit (A; B) with a first and a second claw ring (2, 3; 4, 5) spaced from said first claw ring, with each of the claw rings (2, 3; 4, 5) having a plurality of claws (6, 7; 8, 9) protruding in the axial direction on an inner face surface (2a, 3a; 4a, 5a) facing the other claw ring (2, 3; 4, 5) and free spaces (10, 11; 12, 13) between the claws (6, 7; 8, 9), with the claws (6, 7; 8, 9) of each claw ring (2, 3; 4, 5) engaging in the free spaces (10, 11; 12, 13) of the adjacent claw ring (2, 3; 4, 5), and with elastomeric elements (14a, 15a) being arranged between the claws (6, 7; 8, 9) of mutually engaging claw rings (2, 3; 4, 5), with the free spaces (11, 13) of at least one claw ring (3, 5), preferably the second claw ring (3; 5), being formed by pockets (11a, 13a), and the pockets (11a, 13a) are respectively formed by the flanks (7a, 7b; 9a, 9b) of adjacent claws (7; 9), the inner face surface (3a; 5a) of the claw ring (3; 5) and a cylindrical jacket segment (3c; 5c) extending between the adjacent claws (7; 9), the radius of which corresponds to the smallest distance of the claws (7, 9) from the rotational axis (1a), with the coupling (1) comprising at least two claw units (A, B) switched in series one after the other, with each claw unit (A, B) having a first and second claw ring (2, 3; 4, 5), that at least one claw ring (2), preferably the first claw ring (2) of the first claw unit (A), comprises one bearing sleeve (16) protruding in the axial direction from the inner face surface (2a), with at least one other claw ring (3, 4, 5), preferably the second claw ring (3) of the first claw unit (A), being rotatably mounted on the circumference of the bearing sleeve (16), preferably by way of roller bearings (17, 18), **characterised in that** the first and/or second claw ring (4, 5) of the second claw unit (B) are rotatably mounted on the circumference of the bearing sleeve (16), preferably via roller bearings (18).

2. A coupling (1) according to claim 1, **characterised in that** the claw unit (A, B) is arranged in an outer sleeve (23) which is rigidly connected to one of the claw rings (2, 3; 4, 5).

3. A coupling (1) according to one of the claims 1 or 2, **characterised in that** at least one displacement space (26) is arranged in the torque-free state between each elastomeric element (14a, 14b) and the adjacent areas, preferably the pockets (11a, 13a).

4. A coupling (1) according to claim 2 or 3, **characterised in that** the elastomeric elements (14a, 15b) which are preferably formed by an elastomeric ring (14, 15) are spaced in the radial direction at least partly from the outer sleeve (23), with a second displacement space (27) for the elastomeric elements (14a, 15a) being formed between the elastomeric elements (14a, 15a).

5. A coupling (1) according to one of the claims 2 to 4, **characterised in that** at least one elastomeric element (14a, 15a) comprises a radial elevation (14b, 15b) in the direction of the outer sleeve (23), with preferably the elevation (14b, 15b) making contact with the inside (23a) of the outer sleeve (23).

6. A coupling (1) according to one of the claims 1 to 5, **characterised in that** the mutually bordering inner claw rings (3, 4) are arranged integrally by claw units (A, B) switched behind one another, and form a double claw ring (34).

7. A coupling (1) according to one of the claims 1 to 6, **characterised in that** at least one claw ring (2; 5) of at least one claw unit (A; B) comprises a flange surface (2b; 5b).

8. A coupling (1) according to one of the claims 1 to 7, **characterised in that** an incremental rim (24, 25) is arranged in a torsion-proof manner on at least one outer claw ring (2, 5) or on the outer sleeve (23).

## Revendications

1. Accouplement élastique (1) pour une liaison en rotation de composants d'une ligne de transmission comportant au moins une unité à griffes (A, B) ayant un premier anneau à griffes et un second anneau à griffes (2, 3 ; 4, 5) écartés axialement,
- chacun des anneaux à griffes (2, 3 ; 4, 5) ayant sur sa surface frontale (2a, 3a ; 4a, 5a), tournée vers l'autre anneau à griffes (2, 3 ; 4, 5), un ensemble de griffes (6, 7 ; 8, 9) en saillie dans la direction axiale et entre les griffes (6, 7 ; 8, 9) des intervalles libres (10, 11 ; 12, 13),
- les griffes (6, 7 ; 8, 9) de chaque anneau à griffes (2, 3 ; 4, 5) venant dans les intervalles libres (10, 11 ; 12, 13) de l'anneau à griffes (2, 3 ; 4, 5) voisin, et
- entre les griffes (6, 7 ; 8, 9) des anneaux à griffes (2, 3 ; 4, 5) qui s'interpénètrent, il y a des éléments en élastomère (14a, 15a),
- les intervalles libres (11, 13) d'au moins un anneau à griffes (3, 5), de préférence du second anneau à griffes (3, 5) étant formés par des poches (11a, 13a) et ces poches (11a, 13a) sont couvertes respectivement par les flancs (7a, 7b ; 9a, 9b) de griffes voisines (7, 9) de la surface frontale intérieure (3a, 5a) de l'anneau à griffes (3, 5) et d'un segment enveloppe cylindrique (3c, 5c) s'étendant entre les griffes voisines (7, 9) et dont le rayon correspond à la plus petite distance des griffes (7, 9) par rapport à l'axe de rotation (1a),
- l'accouplement (1) ayant au moins deux unités à griffes (A, B) en série l'une derrière l'autre,
- chaque unité à griffes (A, B) ayant un premier et un second anneau à griffes (2, 3 ; 4, 5),
- au moins un anneau à griffes (2), de préférence le premier anneau à griffes (2) de la première unité à griffes (A) ayant un manchon de palier (16) venant en saillie dans la direction axiale par rapport à sa surface frontale intérieure (2a),
- la périphérie du manchon de palier (16) recevant à rotation un autre anneau à griffes (3, 4, 5), de préférence le second anneau à griffes (3) de la première unité à griffes (A), de préférence par l'intermédiaire de paliers à roulement (17, 18),
accouplement **caractérisé en ce que**
le premier et/ou le second anneau à griffes (4, 5) de la seconde unité à griffes (B) sont montés à rotation à la périphérie du manchon de palier (16) de préférence par des paliers à roulement (18).

2. Accouplement (1) selon la revendication 1,
**caractérisé en ce que**
les unités à griffes (A, B) sont montées dans un manchon extérieur (23) relié solidairement à l'un des anneau à griffes (2, 3 ; 4, 5).

3. Accouplement (1) selon l'une des revendications 1 ou 2,
**caractérisé en ce qu'**
à l'état hors couple, on a au moins un premier espace de refoulement (26) entre chaque élément en élastomère (14a, 14b) et les surfaces adjacentes, de préférence celles des poches (11a, 13a).

4. Accouplement (1) selon les revendications 2 ou 3,
**caractérisé en ce que**
les éléments en élastomère (14a, 15a) réalisés de préférence par un anneau en élastomère (14, 15) sont écartés dans la direction radiale au moins en partie par rapport au manchon extérieur (23), et
- entre les éléments en élastomère (14a, 15a) et le manchon extérieur (23) il est formé un second espace de refoulement (27) pour les éléments en élastomère (14a, 15a).

5. Accouplement(1) selon les revendications 2 à 4,
**caractérisé en ce qu'**
au moins un élément en élastomère (14a, 15a) a un bossage radial (14b, 15b) en direction du manchon extérieur (23), et
de préférence le bossage (14b, 15b) est en contact avec le côté intérieur (23a) du manchon extérieur (23).

6. Accouplement (1) selon l'une des revendications 1 à 5,
**caractérisé en ce que**
les anneaux à griffes intérieurs (3, 4) adjacents sont réalisés en une seule pièce par les unités à griffes (A, B) installées l'une derrière l'autre et constituant un double anneau à griffes (34).

7. Accouplement (1) selon les revendications 1 à 6,
**caractérisé en ce qu'**
au moins un anneau à griffes (2, 5) comporte au moins une unité à griffes (A, B) d'une surface de griffes (2b, 5b).

8. Accouplement (1) selon l'une des revendications 1 à 7,
**caractérisé en ce qu'**
au moins l'anneau à griffes (2, 5) extérieur ou le manchon extérieur (23) porte solidairement en rotation une couronne incrémentale (24, 25).
